# EUROPEAN PATENT SPECIFICATION

(11) **EP 4 243 184 B1**
(45) Date of publication and mention of the grant of the patent: **16.09.2026**
(21) Application number: 23158787.4
(22) Date of filing: 27.02.2023
(51) Int. Cl.: H01M 50/474, H01M 50/477, H01M 50/533, H01M 10/0587, H01M 10/04

(54) **BATTERY**
BATTERIE
BATTERIE

(30) Priority: 09.03.2022 JP 2022036129
(43) Date of publication of application: 13.09.2023
(73) Proprietor: Prime Planet Energy & Solutions, Inc., Tokyo 103-0022 (JP)
(72) Inventor: WAKIMOTO, Ryoichi, Tokyo 103-0022 (JP)
(74) Representative: Kuhnen & Wacker Patent- und Rechtsanwaltsbüro PartG mbB

(56) References cited:
- US-A1- 2018 047 971

## Description

### BACKGROUND OF THE DISCLOSURE

### 1. Technical Field

The present disclosure relates to a battery.

### 2. Background

A secondary battery disclosed in International Patent Publication 2021/060010 includes an electrode body, a battery case, and an electrical collector body. The electrode body includes a positive electrode tab group at one end part and a negative electrode tab group at the other end part. The electrical collector body is attached to a sealing plate of the battery case. In addition, the electrical collector body is attached to each of the positive electrode tab group and the negative electrode tab group, so as to be electrically connected to an electrode of the electrode body.

In this cited document, the electrical collector body is connected to the positive electrode tab group and the negative electrode tab group while they are in a state of being folded and bent. Then, this cited document proposes to attach a fixing means (for example, tape) over a first main surface of the electrode body, the electrical collector body to which the electrode tab group is attached, and a second main surface being opposed to the first main surface, so as to enhance an assemblability of the secondary battery.

Further, patent document US 2018/047971 A1 discloses a power storage device including a case accommodating an electrode assembly and having a lid, a current interrupting device, and an insulating member. The electrode assembly has a tab-side end face opposed to an inner face of the lid. The current interrupting device has a device end face opposed to the tab-side end face. The insulating member has an insulating end face opposed to the tab-side end face. A distance from the inner face to the device end face in a state where the current interrupting device is positioned closest to the inner face is defined as a first dimension. A distance from the inner face to the insulating end face in a state where the insulating member is positioned closest to the inner face is defined as a second dimension. The first dimension is smaller than the second dimension.

### SUMMARY OF THE INVENTION

An object of the present invention is to suppress an inside short circuit of the battery.

The above object is solved by the subject-matter of claim 1. Further advantageous configurations of the invention can be drawn from the dependent claims.

A herein disclosed battery according to an explanatory aspect includes an electrode body, a battery case, and a first electrical collector member. The electrode body includes a first electrode and a second electrode, is formed in a flat-shaped, and includes a first electrode tab group connected to the first electrode. The battery case includes an outer package and a sealing plate. The outer package is configured to accommodate the electrode body and includes an opening. The sealing plate is configured to seal the opening. The first electrical collector member is connected to the first electrode tab group. The first electrical collector member includes a first area that is arranged along a surface at the electrode body side of the sealing plate. A first insulating member is arranged between the sealing plate and the first area. A second insulating member is arranged between the first area and the electrode body. The second insulating member is connected to the first insulating member.

In accordance with such a configuration, even if a vibration impact, or the like, is added to a battery and then the electrode body is moved to the sealing plate side, it is possible to suppress the electrode body from coming into contact with the first electrical collector member. Thus, in the herein disclosed battery, generation of an inside short circuit is suppressed.

### BRIEF DESCRIPTION OF THE DRAWINGS

FIG. 1 is a perspective view of a battery 1 in accordance with Embodiment 1.
FIG. 2 is a II-II cross section view of FIG. 1.
FIG. 3 is a perspective view of an electrode body 20 attached to a sealing plate 14.
FIG. 4 is a perspective view of the electrode body 20 to which a second electrical collector part 52 is attached.
FIG. 5 is a schematic view of the electrode body 20.
FIG. 6 is a perspective view of a first insulating member 70.
FIG. 7 is a perspective view of a sealing plate 14 to which a second insulating member 80 is attached.
FIG. 8 is a perspective view of the second insulating member 80.
FIG. 9 is a perspective view of the second insulating member 80.
FIG. 10 is a perspective view of a second insulating member 280 in accordance with Embodiment 2.
FIG. 11 is a perspective view of the second insulating member 280 in accordance with Embodiment 2.
FIG. 12 is a perspective view of the sealing plate 14 to which the second insulating member 280 is attached.
FIG. 13 is a cross section view of the sealing plate 14 to which the second insulating member 280 is attached.

### DETAILED DESCRIPTION OF THE PREFERRED EMBODIMENTS

Below, while referring to drawings, some of preferred embodiments for a herein disclosed technique will be explained. The embodiments explained here are, of course, not particularly intended to restrict a herein disclosed technique. Each of drawings is schematically drawn, and thus does not always reflect a real one. In addition, the members/parts providing the same effect are suitably given with the same numerals and signs, and an overlapped explanation will be omitted. Incidentally, the matters other than matters particularly mentioned in this specification but required for practicing the present disclosure (for example, a general configuration and manufacture process of a battery which do not characterize the herein disclosed technique) can be grasped as design matters of those skilled in the art based on the related art in the present field. The herein disclosed technique can be executed based on the contents disclosed in the present specification, and the technical common sense in the present field. In addition, a wording "A to B" representing a numerical value range in the present specification means "equal to or more than A and not more than B", and furthermore semantically covers a condition being more than A and less than B.

In the present specification, the "secondary battery" is a term widely denoting an electric storage device capable of repeatedly charging and discharging, and is a concept containing so called storage batteries (chemical batteries), such as a lithium ion secondary battery and a nickel hydrogen battery, and containing capacitors, such as an electric double layer capacitor. In the present specification, the "secondary battery" might be simply referred to as "battery", too.

On the drawings referred in the present specification, a reference sign X represents a "depth direction", a reference sign Y represents a "width direction", and a reference sign Z represents a "height direction". Additionally, in the depth direction X, F represents a "front" and Rr represents a "rear". In the width direction Y, L represents a "left" and R represents a "right". Then, in the height direction Z, U represents an "up" and D represents a "down". However, these are merely directions for convenience sake of explanation, which never restrict the disposed form of the battery.

### <<Embodiment 1>>

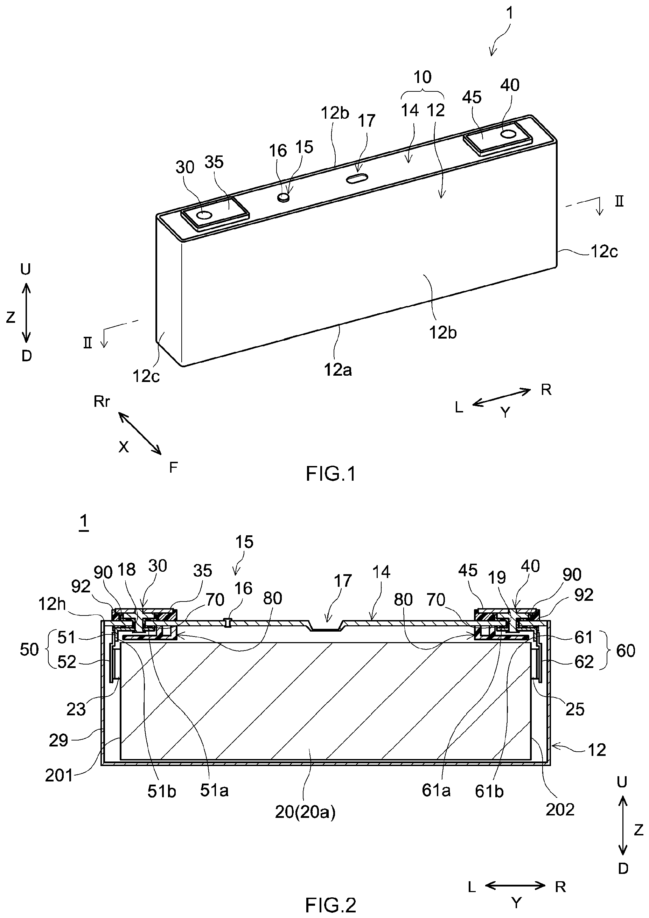

FIG. 1 is a perspective view of a battery 1 in accordance with Embodiment 1. FIG. 2 is a II-II cross section view of FIG. 1. As shown in FIGs. 1 and 2, the battery 1 includes a battery case 10, an electrode body 20, a positive electrode terminal 30, a negative electrode terminal 40, an outside electrically conductive members 35, 45, a positive electrode electrical collector member 50, a negative electrode electrical collector member 60, a first insulating member 70, a second insulating member 80, a gasket 90, and an outside insulating member 92. The battery 1 is, in this embodiment, a lithium ion secondary battery. As omitted in drawings, the battery 1 includes, for example, an electrolyte. Regarding the electrolyte, an electrolyte being used as an electrolyte for this kind of lithium ion secondary battery can be used without particular restriction. A composition of the above described electrolyte does not characterize the herein disclosed technique, and thus explanation for the composition is omitted here.

The battery case 10, in this embodiment, is a housing that accommodates the electrode body 20 and the electrolyte, inside. The battery case 10 here has an outer appearance that is formed in a flat and bottomed rectangular parallelopiped shape (square shape). A material of the battery case 10 might be the same as a material conventionally used, and is not particularly restricted. It is preferable that the battery case 10 is made of metal, and it is more preferable that, for example, the battery case is made of aluminum, aluminum alloy, iron, iron alloy, or the like.

The battery case 10 in this embodiment includes an outer package 12 and a sealing plate (cover, lid) 14. As shown in FIG. 1, the outer package 12 includes a bottom part 12a being rectangular in a plane view, a pair of long side walls 12b extending in the height direction Z from a pair of opposed sides of the bottom part 12a and being opposed mutually, and a pair of short side walls 12c extending in the height direction Z from a pair of opposed sides of the bottom part 12a and being opposed mutually. In this embodiment, the long side walls 12b extend from a pair of long opposed sides of the bottom part 12a. In addition, the short side walls 12c extend from a pair of short opposed sides of the bottom part 12a. In this embodiment, an area size of the short side wall 12c is smaller than an area size of the long side wall 12b. A portion being opposed to the bottom part 12a and being surrounded by the pair of long side walls 12b and the pair of short side walls 12c is an opening 12h. Incidentally, the short side wall 12c is an example of "first side wall" in the herein disclosed battery. In addition, the long side wall 12b is an example of "second side wall" in the herein disclosed battery.

The sealing plate 14 is a member for sealing the opening 12h of the outer package 12. The sealing plate 14 is opposed to the bottom part 12a of the outer package 12. The sealing plate 14 is approximately rectangular in a plane view. The battery case 10 is integrated by joining the sealing plate 14 to a peripheral edge of the opening 12h of the outer package 12. The above described joining means is, for example, welding, such as laser welding. The battery case 10 is airtightly sealed (tightly closed).

The sealing plate 14 is provided with a liquid injection hole 15 and a gas exhaust valve 17. The liquid injection hole 15 is for performing a liquid injection of the electrolyte after the sealing plate 14 is assembled to the outer package 12. The liquid injection hole 15 is sealed by a sealing member 16. The gas exhaust valve 17 is a thin-walled part configured to be broken when a pressure inside the battery case 10 becomes equal to or more than a predetermined value, so as to exhaust a gas inside the battery case 10 to the outside.

As shown in FIGs. 1 and 2, a positive electrode terminal 30 and a negative electrode terminal 40 are attached to the sealing plate 14. In this embodiment, the positive electrode terminal 30 is arranged at one end part (left end part in FIGs. 1 and 2) in a long side direction Y of the sealing plate 14. In this embodiment, the negative electrode terminal 40 is arranged at the other end part (right end part in FIGs. 1 and 2) in the long side direction Y of the sealing plate 14.

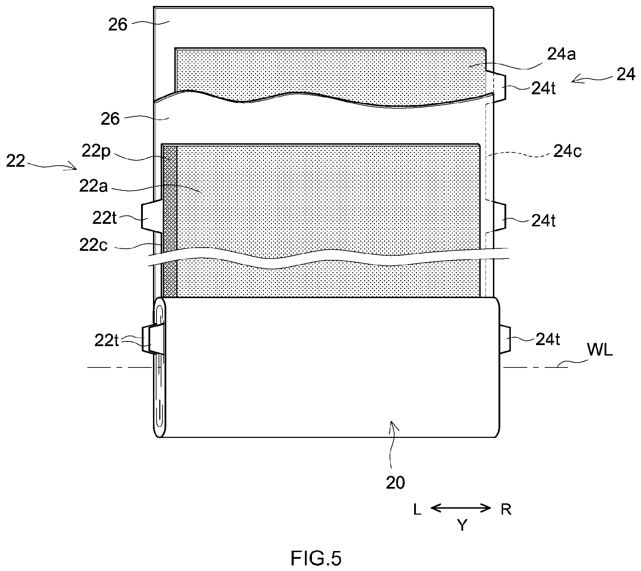

As shown in FIG. 2, the positive electrode terminal 30 is electrically connected to a positive electrode 22 of the electrode body 20 via the positive electrode electrical collector member 50 inside the outer package 12 (see FIG. 5). The positive electrode terminal 30 is inserted into a terminal taking out hole 18 so as to be derived from the inside to the outside of the sealing plate 14. The positive electrode terminal 30 is insulated from the sealing plate 14 by the first insulating member 70 and the gasket 90. It is preferable that the positive electrode terminal 30 is made of metal, and it is more preferable that the positive electrode terminal is made of, for example, aluminum or aluminum alloy. On the positive electrode terminal 30, the outside electrically conductive member 35 is fixed. The positive electrode terminal 30 is joined with the outside electrically conductive member 35.

As shown in FIG. 2, the negative electrode terminal 40 is electrically connected to a negative electrode 24 of the electrode body 20 via the negative electrode electrical collector member 60 inside the outer package 12 (see FIG. 5). The negative electrode terminal 40 is, for example, inserted into a terminal taking out hole 19 so as to be derived from the inside to the outside of the sealing plate 14. The negative electrode terminal 40 is insulated from the sealing plate 14 by the first insulating member 70 and the gasket 90. It is preferable that the negative electrode terminal 40 is made of metal, and it is more preferable that the negative electrode terminal is made of, for example, copper or copper alloy. On the negative electrode terminal 40, the outside electrically conductive member 45 is fixed. The negative electrode terminal 40 is joined with the outside electrically conductive member 45.

The positive electrode electrical collector member 50 is, for example, a member that electrically connects the positive electrode 22 and the positive electrode terminal 30, inside the outer package 12. As shown in FIG. 2, the positive electrode electrical collector member 50 includes a first electrical collector part 51 and a second electrical collector part 52. The first electrical collector part 51 is, for example, formed in a letter "L" shape in a cross section view. The first electrical collector part 51 includes, for example, a first area 51a and a second area 51b. As shown in FIG. 2, the first area 51a is arranged along a surface at the electrode body 20 side of the sealing plate 14. The second area 51b, for example, extends from one end part of the first area 51a in the width direction Y toward the bottom part 12a. Onto the second area 51b, for example, the second electrical collector part 52 is connected. Incidentally, the positive electrode electrical collector member 50 is an example of "first electrical collector member" in the herein disclosed battery. In addition, the "surface at the electrode body 20 side of the sealing plate 14" is referred in the following explanation as "inner side surface of the sealing plate 14", too.

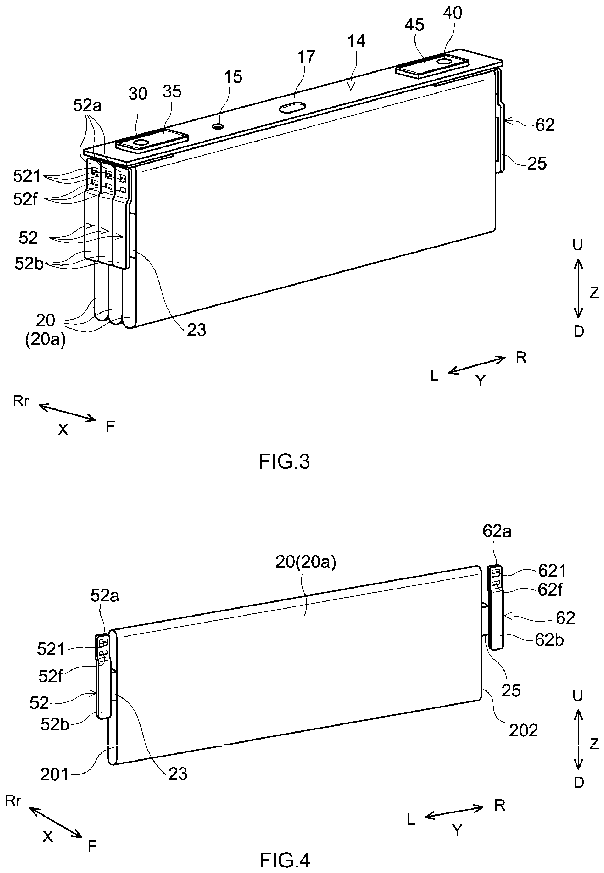

FIG. 3 is a perspective view of the electrode body 20 attached to the sealing plate 14. FIG. 4 is a perspective view of the electrode body 20 to which the second electrical collector part 52 is attached. As shown in FIGs. 2 to 4, the second electrical collector part 52 extends toward the bottom part 12a of the outer package 12. In this embodiment, the second electrical collector part 52 includes a first connecting piece 52a and a second connecting piece 52b. The first connecting piece 52a is, for example, a portion that is electrically connected to the first electrical collector part 51. In this embodiment, the first connecting piece 52a is connected to the first electrical collector part 51 via a connecting portion 521. The connecting portion 521 is, for example, a thin-walled part. The first connecting piece 52a, for example, extends along the vertical direction Z. The first connecting piece 52a is, in this embodiment, arranged in an approximately perpendicular manner to a wound axis WL of each electrode body 20. Although not particularly restricting, a fuse part 52f might be formed on the first connecting piece 52a. The fuse part 52f is configured to fuse when a current equal to or more than 1000 A (for example, short circuit current) flows into the battery 1.

The second connecting piece 52b is, for example, a portion that is joined with the positive electrode tab group 23. In this embodiment, the second connecting piece 52b extends along the vertical direction Z. The second connecting piece 52b is arranged in an approximately perpendicular manner to the wound axis WL of each electrode body 20. A surface of the second connecting piece 52b connected to plural positive electrode tabs 22t is arranged in an approximately parallel manner to the short side wall 12c of the outer package 12. From a perspective of sufficiently securing a width of the second connecting piece 52b so as to decrease a battery resistance of the battery 1, the surface of the second connecting piece 52b connected to plural positive electrode tabs 22t is arranged to be opposed to a first end part 201 of the electrode body 20.

The negative electrode electrical collector member 60 is a member that electrically connects the negative electrode 24 and the negative electrode terminal 40, inside the outer package 12. As shown in FIGs. 2 to 4, the negative electrode electrical collector member 60 includes a first electrical collector part 61 and a second electrical collector part 62. The first electrical collector part 61 includes a first area 61a and a second area 61b. The second electrical collector part 62 includes a first connecting piece 62a and a second connecting piece 62b. A configuration of the negative electrode electrical collector member 60 is similar to a configuration of the above described positive electrode electrical collector member 50, and an explanation of it is omitted here. Incidentally, regarding the negative electrode electrical collector member 60, a reference sign "621" in FIG. 4 represents a connecting portion, and a reference sign "62f" represents a fuse part. Incidentally, the negative electrode electrical collector member 60 is an example of the "second electrical collector member" in the herein disclosed battery.

As shown in FIG. 3, the battery 1 includes three electrode bodies 20. As shown in FIGs. 3 and 4, the second electrical collector part 52 of the positive electrode electrical collector member 50 is arranged at one side (left side in FIGs. 3 and 4) in the long side direction Y, and the second electrical collector part 62 of the negative electrode electrical collector member 60 is arranged at the other side (right side in FIGs. 3 and 4) in the long side direction Y, which are connected in parallel. As shown in FIG. 2, one or plural electrode bodies 20 are arranged inside the outer package 12 in a state of being covered with an electrode body holder 29 that consists of a sheet made of resin, such as polypropylene (PP). Incidentally, a number of the electrode bodies 20 accommodated by the battery 1 might be, which is not particularly restricted, for example, 1, 2, or not less than 4.

FIG. 5 is a schematic view of the electrode body 20. As shown in FIG. 5, the electrode body 20 is a flat-shaped electrode body that includes the positive electrode 22 and the negative electrode 24. In addition, the electrode body 20 includes a separator 26 that is arranged between the positive electrode 22 and the negative electrode 24. As shown in FIG. 5, the electrode body 20 is a wound electrode body, in which the positive electrode 22 and the negative electrode 24 are laminated via the separator 26 and then the resultant is wound with the wound axis WL treated as a center. Incidentally, the positive electrode 22 is an example of "first electrode" in the herein disclosed battery. In addition, the negative electrode 24 is an example of "second electrode" in the herein disclosed battery.

As shown in FIGs. 2 to 4, the electrode body 20 includes an electrode body main part 20a, a positive electrode tab group 23, and a negative electrode tab group 25. The electrode body main part 20a is a portion where the positive electrode 22, the negative electrode 24, and the separator 26 are laminated, and is, for example, formed in a flat shape. In this embodiment, the positive electrode tab group 23 is connected to the positive electrode 22. As shown in FIGs. 2 and 4, the positive electrode tab group 23 is arranged at one end part in a direction (below, referred to as "wound axis direction", too) along the wound axis WL of the electrode body 20. In this embodiment, the negative electrode tab group 25 is connected to the negative electrode 24. As shown in FIGs. 2 and 4, the negative electrode tab group 25 is arranged at the other end part in the wound axis direction of the electrode body 20. In the present specification, an end part of the electrode body 20 in a wound axis direction where the positive electrode tab group 23 is arranged is treated as "first end part 201" and an end part where the negative electrode tab group 25 is arranged is treated as "second end part 202".

As shown in FIGs. 1, 2, and 5, the electrode body 20 is arranged inside the outer package 12 in a direction, which makes the wound axis WL be parallel to the width direction Y. In this embodiment, the electrode body 20 is arranged inside the outer package 12 in a direction which makes the wound axis WL be parallel to the bottom part 12a and which is orthogonal to the short side wall 12c. In the embodiment shown by FIG. 2, the first end part 201 and second end part 202 of the electrode body 20 are respectively opposed to the pair of short side walls 12c of the outer package 12. As shown in FIG. 2, the positive electrode tab group 23 is arranged at one side (left side in the same drawing) among the pair of short side walls 12c. In addition, the negative electrode tab group 25 is arranged at the other side (right side in the same drawing) among the pair of short side walls 12c. An effect of the herein disclosed technique can be suitably implemented in the battery 1 including the above described configuration.

A width of the electrode body main part 20a is, for example, equal to or more than 20 cm. The width of the electrode body main part 20a might be, for example, equal to or more than 25 cm, or equal to or more than 30 cm. The width of the electrode body main part 20a might be, for example, equal to or less than 50 cm, or equal to or less than 40 cm. In the present specification, the "width of the electrode body main part 20a" means, for example, a length of the electrode body main part 20a in a shorter direction (width direction Y in FIG. 5) of the positive electrode 22 and negative electrode 24.

The separator 26 is a member that is configured to establish an insulation between a positive electrode active material layer 22a of the positive electrode 22 and a negative electrode active material layer 24a of the negative electrode 24. The separator 26 configures an outer surface of the electrode body 20. As the separator 26, for example, it is possible to use porous sheet made of resin consisting of polyolefin resin, such as polyethylene (PE) and polypropylene (PP). As the separator 26, it is possible to use a separator, for example, which includes a base material (the above described resin-made porous sheet) and an adhesion layer provided on the base material.

The positive electrode 22 is, for example, a positive electrode plate that includes a positive electrode electrical collector foil 22c formed in a long strip-like shape (for example, aluminum foil) and the positive electrode active material layer 22a being fixed on at least one of surfaces of the positive electrode electrical collector foil 22c. In this embodiment, the positive electrode active material layers 22a are formed in strip-like shapes on both surfaces of the positive electrode electrical collector foil 22c. Although not particularly restricting, a positive electrode protective layer 22p might be provided, as needed, at one of side edge parts in the width direction Y of the positive electrode 22. In this embodiment, the positive electrode protective layer 22p is formed in a strip-like shape at one end part (here, end part at the positive electrode tab 22t side) of the positive electrode active material layer 22a. Incidentally, regarding materials configuring the positive electrode active material layer 22a or the positive electrode protective layer 22p, it is possible to use ones used for this kind of secondary battery (lithium ion secondary battery, in this embodiment) without particular restriction.

At one end part (left end part in FIG. 5) in the width direction Y of the positive electrode electrical collector foil 22c, plural positive electrode tabs 22t are provided. The plural positive electrode tabs 22t each protrudes toward one side (left side in FIG. 5) in the width direction Y. The plural positive electrode tabs 22t are provided at intervals (intermittently) along a longitudinal direction of the positive electrode 22. The positive electrode tab 22t is a part of the positive electrode electrical collector foil 22c, and is a portion (electrical collector foil exposed part) on which the positive electrode active material layer 22a and positive electrode protective layer 22p of the positive electrode electrical collector foil 22c are not formed. In this embodiment, plural positive electrode tabs 22t protrude in the width direction Y more than the separator 26. For example, plural positive electrode tabs 22t are laminated at one end part (left end part in FIG. 5) in the width direction Y so as to configure the positive electrode tab group 23 (see FIGs. 2 to 4). As shown in FIG. 2, the positive electrode electrical collector member 50 is joined to the positive electrode tab group 23. As shown in FIGs. 1 to 3, the positive electrode tab group 23 joined to the positive electrode electrical collector member 50 is folded and bent so as to make tip ends of plural positive electrode tabs 22t configuring the positive electrode tab group 23 be arranged along the short side wall 12c. Incidentally, although the positive electrode tabs 22t, mutually having approximately the same lengths and shapes, are shown in FIG. 5, the lengths and shapes of respective positive electrode tabs 22t might be mutually different.

The negative electrode 24 is, for example, a negative electrode plate that includes a negative electrode electrical collector foil 24c (for example, copper foil) formed in a long strip-like shape, and a negative electrode active material layer 24a fixed on at least one of surfaces of the negative electrode electrical collector foil 24c. In this embodiment, the negative electrode active material layers 24a are formed in strip-like shapes on both surfaces of the negative electrode electrical collector foil 24c. Incidentally, regarding materials configuring the negative electrode active material layer 24a, it is possible to use ones used for this kind of secondary battery (lithium ion secondary battery, in this embodiment) without particular restriction.

At one end part (right end part in FIG. 5) of the negative electrode electrical collector foil 24c in the width direction Y, plural negative electrode tabs 24t are provided. The plural negative electrode tabs 24t protrude toward one side (right side in FIG. 5) in the width direction Y. The plural negative electrode tabs 24t are provided at intervals (intermittently) along a longitudinal direction of the negative electrode 24. The negative electrode tab 24t here is a part of the negative electrode electrical collector foil 24c, and is a portion (electrical collector foil exposed part) on which the negative electrode active material layer 24a of the negative electrode electrical collector foil 24c is not formed. In this embodiment, the negative electrode tab 24t protrudes in the width direction Y more than the separator 26. For example, plural negative electrode tabs 24t are laminated at one end part (right end part in FIG. 5) in the width direction Y so as to configure the negative electrode tab group 25 (see FIGs. 2 to 4). As shown in FIG. 2, the negative electrode tab group 25 is joined to the negative electrode electrical collector member 60. The negative electrode tab group 25 joined to the negative electrode electrical collector member 60 is folded and bent so as to make tip ends of the plural negative electrode tabs 24t configuring the negative electrode tab group 25 be arranged along the short side wall 12c. Incidentally, although the negative electrode tabs 24t, mutually having approximately the same lengths and shapes, are shown in FIG. 5, the lengths and shapes of respective negative electrode tabs 24t might be mutually different.

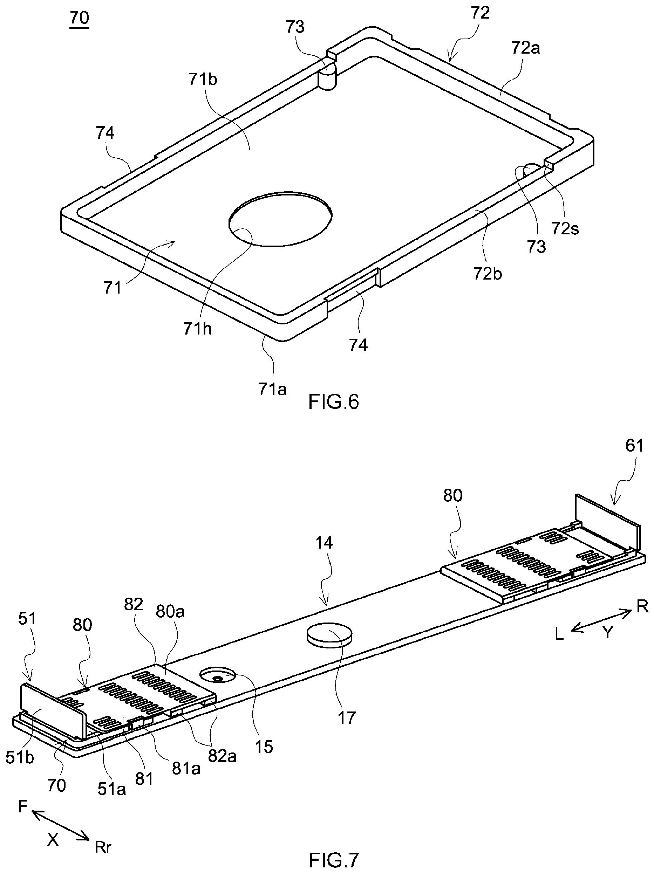

FIG. 6 is a perspective view of the first insulating member 70. The first insulating member 70, in this embodiment, is a member being approximately rectangular in a plane view which is configured to establish an insulation between the sealing plate 14 and the positive electrode electrical collector member 50. As shown in FIG. 2, the first insulating member 70 is arranged between the sealing plate 14 and the first area 51a. As shown in FIG. 6, the first insulating member 70 includes a flat part 71, an outer circumferential wall 72, a pair of protruding parts 73, and a pair of recessed parts 74. The flat part 71 is, for example, a portion arranged between the sealing plate 14 and the first area 51a. As shown in FIG. 6, the flat part 71 includes a first flat surface 71a and a second flat surface 71b. In this embodiment, the first flat surface 71a is arranged along an inner side surface of the sealing plate 14. In addition, the first area 51a of the positive electrode electrical collector member 50 is arranged on the second flat surface 71b. The flat part 71 is provided with a penetration hole 71h. Into the penetration hole 71h the positive electrode terminal 30 is inserted.

As shown in FIG. 6, the outer circumferential wall 72 is a portion provided at a periphery of the flat part 71. In this embodiment, the first area 51a of the positive electrode electrical collector member 50 is arranged in a space surrounded by the outer circumferential wall 72 and the flat part 71. The outer circumferential wall 72 is, for example, configured with a first outer circumferential wall 72a and second outer circumferential wall 72b, whose heights are mutually different. The first outer circumferential wall 72a is, for example, an outer circumferential wall being relatively higher, and is arranged at the short side wall 12c side (see FIG. 2). The second outer circumferential wall 72b is, for example, an outer circumferential wall being relatively lower, and is arranged at the inner side in the long side direction Y of the sealing plate 14 (liquid injection hole 15 side in FIG. 2). The second outer circumferential wall 72b, for example, abuts on a top end of a wall part 81b of the second insulating member 80. As shown in FIG. 6, a step 72s is provided between the first outer circumferential wall 72a and the second outer circumferential wall 72b. By the step 72s, the first outer circumferential wall 72a and the second outer circumferential wall 72b are continued.

The pair of protruding parts 73 each is, for example, a portion that is configured to stably hold the first electrical collector part 51 to the first insulating member 70. As shown in FIG. 6, the pair of protruding parts 73 are provided in a linearly symmetrical manner with respect to a symmetrical axis, which passes a center of the penetration hole 71h and extends in the long side direction of the flat part 71 (long side direction Y of the sealing plate 14 in FIG. 2). The pair of protruding parts 73 are, for example, sandwiches the first area 51a in the short side direction X of the sealing plate 14 and fix it.

The pair of recessed parts 74 is, for example, a portion to which the second insulating member 80 is attached. As shown in FIG. 6, the pair of recessed parts 74 are provided on the outer circumferential surface of the second outer circumferential wall 72b. In this embodiment, the pair of recessed parts 74 is provided in a linearly symmetrical manner with respect to a symmetrical axis, which passes a center of the penetration hole 71h and extends in the long side direction of the flat part 71 (long side direction Y of the sealing plate 14 in FIG. 2).

The first insulating member 70 has, for example, a resistant property for use of the electrolyte and an electric insulating property, and is configured with a resin material capable of performing elastic deformation. It is preferable that the first insulating member 70 is configured with, for example, a fluorinated resin, such as tetrafluoroethylene-perfluoroalkoxyethylene copolymer (PFA); or a resin material, such as polyphenylene sulfide (PPS).

As shown in FIG. 2, a plate-shaped second insulating member 80 is arranged between the first area 51a and the electrode body 20. FIG. 7 is a perspective view of the sealing plate 14 to which the second insulating member 80 is attached. FIG. 7 is a perspective view for explaining a configuration at the inner side of the sealing plate 14. FIG. 7 shows a state where the first insulating member 70, the first electrical collector parts 51, 61 and the second insulating member 80 are attached to the inner side surface of the sealing plate 14. As shown in FIG. 7, the second insulating member 80 is connected to the first insulating member 70. The second insulating member 80 includes an approximately rectangular first surface 80a and second surface 80b (see FIGs. 7 to 9). The first surface 80a is, for example, a surface arranged at the bottom part 12a side of the outer package 12. In this embodiment, the first surface 80a is a surface at the electrode body 20 side. The second surface 80b is, for example, a surface arranged at the sealing plate 14 side. In this embodiment, the second surface 80b is opposed to the first area 51a and the inner side surface of the sealing plate 14.

In this embodiment, a part of the second insulating member 80 abuts on the sealing plate 14. In the embodiment shown by FIG. 7, the second insulating member 80 includes not only an opposed portion (base part 81 described later) to the first area 51a but also an opposed portion to the sealing plate 14. A later described extending area 82 is illustrated as the opposed portion to the sealing plate 14. The extending area 82 described above abuts on the inner side surface of the sealing plate 14. This will be described later. Incidentally, the opposed portion to the sealing plate 14 of the second insulating member 80 might be arranged closer to the sealing plate 14, as not always required to abut on the sealing plate. In a case where the second insulating member 80 is arranged closer to the sealing plate 14, it is preferable that, for example, the shortest distance between this portion (here, extending area 82) and the sealing plate 14 in a direction perpendicular to the sealing plate 14 is equal to or less than 1 mm (preferably, equal to or less than 0.8 mm, or more preferably equal to or less than 0.5 mm). By making a part of the second insulating member 80 abut on or be arranged closer to the sealing plate 14, the second insulating member 80 can be held more stably in the battery case 10. In addition, an inside short circuit suppressing effect in the battery 1 can be enhanced.

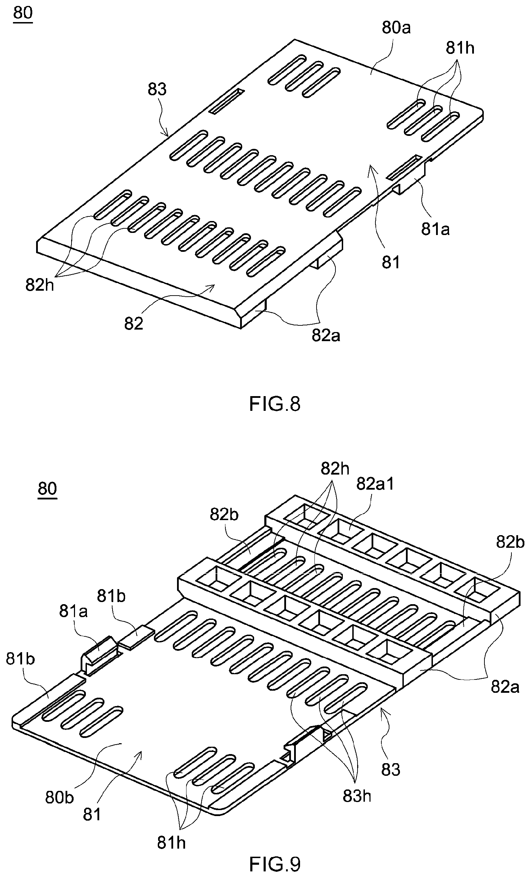

FIGs. 8 and 9 are perspective views of the second insulating member 80. FIG. 8 shows a configuration of the second insulating member 80 viewed from the first surface 80a side. FIG. 9 shows a configuration of the second insulating member 80 viewed from the second surface 80b side. As shown in FIGs. 7 to 9, the second insulating member 80 includes a base part 81 and an extending area 82. By making the second insulating member 80 have the above described configuration, it is possible to more appropriately implement the inside short circuit suppressing effect in the battery 1.

In this embodiment, the second insulating member 80 includes a connecting part 81a that extends from the base part 81 toward the sealing plate 14. In addition, the second insulating member 80 is connected to the first insulating member 70 via the connecting part 81a. The base part 81 is, for example, a plate-shaped portion that is opposed to the first area 51a. In addition, the base part 81 is inserted into a penetration hole provided on the first area 51a, and is opposed to the positive electrode terminal 30 caulked on this area. In this embodiment, a pair of connecting parts 81a are provided on the base part 81. The pair of connecting parts 81a in this embodiment are portions for connecting the second insulating member 80 to the first insulating member 70. In this embodiment, the connecting part 81a is provided at a long side part of the second insulating member 80. The connecting part 81a is, for example, a claw-shaped portion that extends from the second surface 80b. As shown in FIGs. 7 to 9, the pair of connecting parts 81a are provided to pass a center of the second surface 80b in the short side direction so as to be arranged in a linearly symmetrical manner with a symmetrical axis extending in a long side direction. As shown in FIGs. 6 and 7, by making the pair of connecting parts 81a be attached to the pair of recessed parts 74, the second insulating member 80 is connected to the first insulating member 70. By making the connecting part 81a be connected to the first insulating member 70, it is possible to more stably hold the second insulating member 80 at a desired portion.

As shown in FIG. 9, the base part 81 is provided with the wall part 81b that extends from this portion toward the sealing plate 14 side. As shown in FIG. 9, the wall part 81b is formed along the long side part of the second surface 80b. In this embodiment, wall parts 81b are arranged to sandwich the connecting part 81a along the long side direction of the second surface 80b. In addition, as shown in FIG. 7, the top end of the wall part 81b abuts on the outer circumferential wall 72 (here, second outer circumferential wall 72b) of the first insulating member 70. By making the wall part 81b abut on the outer circumferential wall 72, the second insulating member 80 can be more stably connected to the first insulating member 70.

As shown in FIG. 7, the extending area 82 is formed in a plate shape, and is an area being approximately rectangular in a plane view that extends from the base part 81 along the sealing plate 14 toward the central part of the sealing plate 14 (for example, central part of the sealing plate 14 in the long side direction Y). The extending area 82 in this embodiment is an area extending from the end part of the first area 51a to the central part side in the long side direction Y of the sealing plate 14, and is opposed to the inner side surface of the sealing plate 14.

As shown in FIG. 7, the extending area 82 includes an upper protruding part 82a on a surface of the sealing plate 14 side, while the upper protruding part 82a protrudes toward the sealing plate 14. By providing the upper protruding part 82a, for example, it becomes easy to make the extending area 82 abut on or be arranged closer to the inner side surface of the sealing plate 14. As shown in FIGs. 7 to 9, the upper protruding part 82a is provided on the second surface 80b. The upper protruding part 82a is, for example, formed along the short side direction of the second insulating member 80. Plural upper protruding parts 82a might be formed, while mutually separated from each other. In this embodiment, 2 upper protruding parts 82a sandwich plural through holes 82h along the long side direction of the second insulating member 80, while the plural through holes are formed along the short side direction of the second insulating member 80. As shown in FIG. 9, on the portion sandwiched by these 2 upper protruding parts 82a, at an edge of this portion, a wall part 82b is provided along the long side direction of the second insulating member 80. Although not particularly restricting, it is preferable from a perspective for light weighting of the second insulating member 80 to provide plural recessed parts 82a1 on the upper protruding part 82a, while the plural recessed parts are mutually separated.

In the embodiment shown in FIGs. 7 to 9, a cross-sectional area size of an adjacent portion 83 being adjacent to the base part 81 on the extending area 82 is smaller than a cross-sectional area size of base part 81 and than a cross-sectional area size of another portion of the extending area 82 from which the adjacent portion 83 is excluded. In this embodiment, the adjacent portion 83 is provided with plural through holes 83h. As shown in FIGs. 8 and 9, the plural through holes 83h are provided to be mutually separated along the short side direction of the second insulating member 80. The second insulating member 80 can, for example, fuse with the adjacent portion 83 treated as a start point, when a temperature in the battery 1 abnormally rises. Thus, by providing the adjacent portion 83, it is possible to secure a flow channel for gas in the battery 1 at an abnormal time. Incidentally, the cross-sectional area sizes of the base part 81, extending area 82, and adjacent portion 83, for example, respectively mean area sizes of a cross sections where the short side direction of the second insulating member 80 and the thickness direction of the second insulating member 80 do cross respective portions.

Additionally, in this embodiment, a protruding portion, such as wall parts 81b, 82b, is not provided on the adjacent portion 83. Thus, on the second insulating member 80, an opposed portion (here, base part 81) to the first area 51a and an opposed portion (here, extending area 82) to the sealing plate 14 can be divided, while the adjacent portion 83 is treated as a boundary.

In the embodiment shown by FIGs. 7 to 9, the second insulating member 80 is provided with plural through holes. As the through hole described above, a through hole 81h of the base part 81 and the through holes 82h, 83h of the extending area 82 are illustrated. By providing plural through holes on the second insulating member 80, it is possible to suppress accumulation of the electrolyte between the sealing plate 14 and the second insulating member 80 and between the first area 51a and the second insulating member 80. In addition, when the temperature in the battery 1 abnormally rises, it is possible to make the portion provided with the plural through holes be a start point of fuse.

The second insulating member 80 is, for example, configured with an insulating property material, such as a resin material. Particularly, it is preferable that the second insulating member 80 is configured with a material whose melting point is lower than the first insulating member 70. As one example, regarding the configuration material of the second insulating member 80, it is preferable that materials equal to or more than 90 volume% (more preferably, equal to or more than 95 volume%) of the second insulating member 80 are melt, when the battery case 10 including the gas exhaust valve 17 (see FIG. 2, or the like) is cleaved and then the battery contents are blown out (phenomenon A). As the material described above, it is possible to use, for example, polyolefin, such as polypropylene. By configuring the second insulating member 80 with the materials as described above, it is possible to secure the flow channel for gas in the battery 1 at the abnormal time. Incidentally, the phenomenon A can be generated, for example, by making a needle being φ3 mm to φ8 mm pass through the long side wall 12b of the battery 1 during a charge operation in a perpendicular manner to the long side wall at 10 mm/s to 40 mm/s speed (in other words, by causing a short circuit on the battery 1 in this condition).

Above, this embodiment has been explained regarding the second insulating member 80 arranged at the positive electrode terminal 30 side. In this embodiment, the negative electrode terminal 40 side is also similarly configured, and explanation of it is omitted. Incidentally, the second insulating member 80 might be at least arranged at one side among the positive electrode terminal 30 side and the negative electrode terminal 40 side.

As described above, on the herein disclosed battery 1, the first insulating member 70 is arranged between the sealing plate 14 and the first area 51a. The second insulating member 80 is arranged between the first area 51a and the electrode body 20. Then, the second insulating member 80 is connected to the first insulating member 70. For example, even when a vibration impact, or the like, is added to the battery 1 so as to make the electrode body 20 move to the sealing plate 14 side, it is possible to suppress the electrode body from coming into contact with the positive electrode electrical collector member 50 and the positive electrode terminal 30. Thus, in the herein disclosed battery 1, the inside short circuit is suppressed. In addition to the inside short circuit suppressing effect described above, a damage, or the like, on the electrode body 20 is suppressed in the battery 1 by the arrangement of the second insulating member 80 even when a vibration impact, or the like, is added.

Incidentally, although the battery 1 can be used for various purposes, it is possible, for example, to suitably use the battery as a power source for a motor (power supply for driving) mounted on a vehicle, such as a passenger car and a truck. The kind of the vehicle is not particularly restricted, but it is possible to use it, for example, on a plug-in hybrid electric vehicle (PHEV), a hybrid electric vehicle (HEV), a battery electric vehicle (BEV), or the like.

Although specific examples of the herein disclosed technique have been explained above, these are merely illustrations and thus, are not to restrict the scope of claims. The technique recited in claims contains matters in which the above illustrated specific examples are variously deformed or changed. Below, another embodiment of the herein disclosed technique will be described. Incidentally, matters of the following embodiment other than the above described matters are similar to matters explained about the above described Embodiment 1, and thus explanation overlapped here is omitted.

### <<Embodiment 2>>

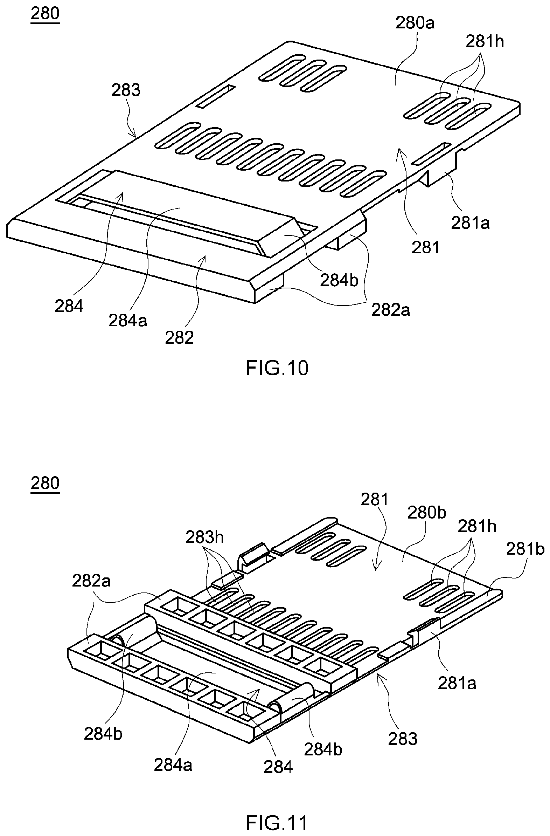

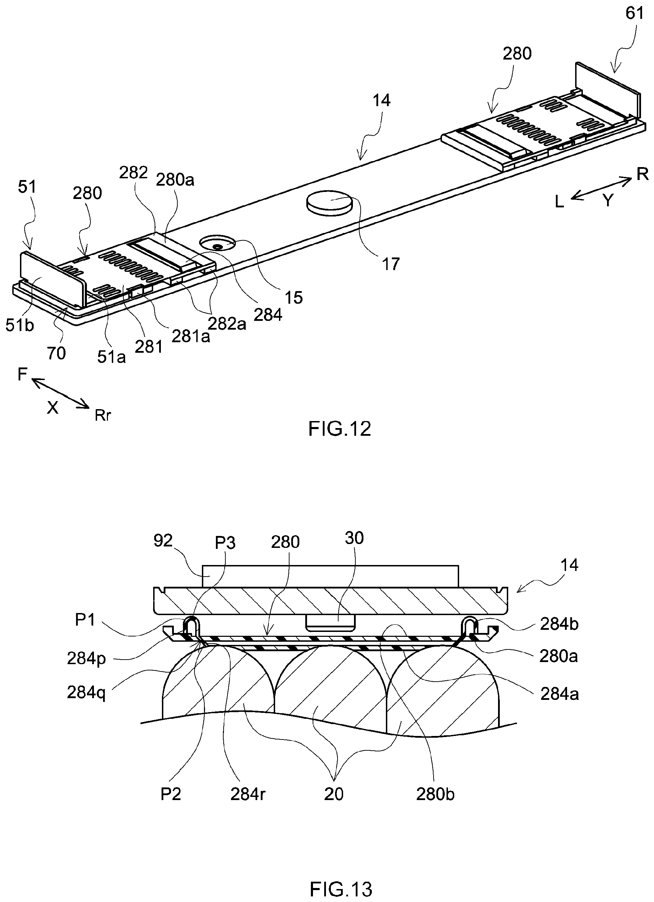

FIGs. 10 and 11 are perspective views of a second insulating member 280 in accordance with Embodiment 2. FIG. 12 is a perspective view of the sealing plate 14 to which the second insulating member 280 is attached. FIG. 13 is a cross section view of the sealing plate 14 to which the second insulating member 280 is attached. FIG. 10 shows a configuration of the second insulating member 280 viewed from a first surface 280a side. FIG. 11 is a configuration of the second insulating member 280 viewed from a second surface 280b side. FIG. 12 shows a state where the first insulating member 70, the first electrical collector parts 51, 61, and the second insulating member 280 are attached to the inner side surface of the sealing plate 14. FIG. 13 shows a state where the second insulating member 280 being attached to the inner side surface of the sealing plate 14 is arranged on the electrode body 20.

As shown in FIGs. 10 to 13, an extending area 282 includes a lower protruding part 284 that protrudes toward the electrode body 20. As shown in FIG. 13, the lower protruding part 284 protrudes from the first surface 280a. By providing the lower protruding part 284, it is possible to push the electrode body 20 toward the bottom part 12a (see FIG. 2), and thus it is possible to suppress the electrode body 20 from moving in the battery case 10. In addition, it is possible to enhance a vibration impact resistant property of the battery 1. Thus, it is possible to more properly implement the inside short circuit suppressing effect of the battery 1. As shown in FIGs. 10 to 12, the lower protruding part 284 is formed along the short side direction of the second insulating member 280. In addition, the lower protruding part 284 is sandwiched along the long side direction of the second insulating member 280 by 2 upper protruding parts 282a.

In this embodiment, the lower protruding part 284 includes a pair of flexible parts 284b. In addition, the lower protruding part 284 is arranged inside battery case 10 in a compression state, by making the flexible part 284b be bent. A pair of flexible parts 284b are, for example, portions bending in accordance with movement of the electrode body 20. As shown in FIG. 13, the pair of flexible parts 284b are arranged at both end parts in the short side direction of the second insulating member 80, so as to configure both end parts in the same direction of the lower protruding part 284. In addition, the lower protruding part 284 includes an electrode body opposed part 284a formed in a flat plate shape. The electrode body opposed part 284a is, for example, a portion opposed to a top end of the electrode body 20 in the battery case 10. As shown in FIG. 13, the electrode body opposed part 284a abuts on the top end of the electrode body 20. Here, it is arranged to bridge top ends of 3 electrode bodies 20 that are aligned in the short side direction of the sealing plate 14.

In this embodiment, the flexible part 284b includes a first extending area 284p, a folded area 284q, and a second extending area 284r. The first extending area 284p in this embodiment is an area extending from the second surface 280b toward the sealing plate 14. In addition, the folded area 284q is an U-shaped area, which extends from a protruding tip end P1 of the first extending area 284p toward the sealing plate 14, is folded at an apex P3, and reaches a starting end P2 of the second extending area 284r. In addition, the second extending area 284r is an area extending to the electrode body 20 side, and extends from the starting end P2 of this area on the first surface 80a toward the electrode body opposed part 284a.

In this embodiment, a portion between the electrode body opposed part 284a and the inner side surface of the sealing plate 14 is a space. In the battery case 10, the electrode body opposed part 284a is pushed by the top end of the electrode body 20 toward the sealing plate 14 and the flexible part 284b can be bent. Thus, the lower protruding part 284 is arranged in a compression state inside the battery case 10. By doing this, a movement suppressing effect of the electrode body 20 in the battery case 10 is enhanced, and the vibration impact resistant property of the battery 1 can be enhanced. Then, the inside short circuit suppressing effect of the battery 1 can be more properly implemented. Incidentally, the lower protruding part 284 might be molded, for example, by folding and bending one resin plate at a predetermined site.

Incidentally, in FIGs. 10 to 13, a reference sign "281" represents a base part, a reference sign "281a" represents a connecting part, a reference sign "281b" represents a wall part, a reference sign "282a" represents an upper protruding part, a reference sign "283" represents an adjacent portion, and, a reference sign "281h" and a reference sign "283h" represent through holes.

### <<Another embodiment>>

In the above described embodiment, the electrode body 20 is a wound electrode body. However, the present disclosure is not restricted by this. The electrode body 20 might be a laminate electrode body in which a rectangular sheet-shaped positive electrode sheet and a rectangular sheet-shaped negative electrode sheet are alternately laminated via a separator sheet.

## Claims

1. A battery (1), comprising:
an electrode body (20) in a flat shape, which contains a first electrode (22) and a second electrode (24), and comprises a first electrode tab group (23) connected to the first electrode (22);
a battery case (10) that comprises an outer package (12) being configured to accommodate the electrode body (20) and having an opening (12h), and comprises a sealing plate (14) configured to seal the opening (12h);
a first electrical collector member (50) that is connected to the first electrode tab group (23); and
a first electrode terminal (30) that is electrically connected to the first electrode (22),
wherein
the sealing plate (14) has a terminal taking out hole (18),
the first electrical collector member (50) comprises a first area (51a) that is arranged along a surface at a side of the electrode body (20) of the sealing plate (14),
a first insulating member (70) is arranged between the sealing plate (14) and the first area (51a),
the first insulating member (70) has a penetration hole (71h),
the first electrode terminal (30) is inserted into the terminal taking out hole (18),
the first electrode terminal (30) is inserted into the penetration hole (71h),
a second insulating member (80, 280) is arranged between the first area (51a) and the electrode body (20), and
the second insulating member (80, 280) is connected to the first insulating member (70).

2. The battery (1) according to claim 1, wherein
the electrode body (20) comprises a second electrode tab group (25) that is connected to the second electrode (24),
the first electrode tab group (23) is arranged at one end part (201) of the electrode body (20),
the second electrode tab group (25) is arranged at another end part (202) of the electrode body (20),
the battery case (10) comprises a bottom part (12a), a pair of first side walls (12c), and a pair of second side walls (12b),
the first electrode tab group (23) is arranged at one side of the pair of first side walls (12c), and
the second electrode tab group (25) is arranged at another side of the pair of first side walls (12c).

3. The battery (1) according to claim 1 or 2, wherein
a part of the second insulating member (80, 280) abuts on or is arranged closer to the sealing plate (14).

4. The battery (1) according to any one of claims 1-3, wherein
the second insulating member (80, 280) comprises:
a base part (81, 281) that is opposed to the first area (51a); and
an extending area (82, 282) that extends from the base part (81, 281) along the sealing plate (14) toward a central part of the sealing plate (14).

5. The battery (1) according to claim 4, wherein
the second insulating member (80, 280) comprises a connecting part (81a, 281a) that extends from the base part (81, 281) toward the sealing plate (14), and
the second insulating member (80, 280) is connected to the first insulating member (70) via the connecting part (81a, 281a).

6. The battery (1) according to claim 4 or 5, wherein
the extending area (82, 282) comprises an upper protruding part (82a, 282a) on a surface (80b, 280b) of the sealing plate side (14), and
the upper protruding part (82a, 282a) is configured to protrude toward the sealing plate (14).

7. The battery (1) according to any one of claims 4-6, wherein
on the extending area (82, 282), a cross-sectional area size of an adjacent portion (83, 283) being adjacent to the base part (81, 281) is smaller than a cross-sectional area size on the base part (81, 281) and a cross-sectional area size on another portion of the extending area (82, 282) excluding the adjacent portion (83, 283).

8. The battery (1) according to any one of claims 1-7, wherein
the second insulating member (80, 280) comprises plural through holes (81h, 82h, 83h, 281h, 283h).

9. The battery (1) according to any one of claims 1-8, wherein
the second insulating member (80, 280) is configured with a material whose melting point is lower than the first insulating member (70).

10. The battery (1) according to any one of claims 4-7, wherein
the extending area (282) comprises a lower protruding part (284) on the surface (280a) at the side of the electrode body (20), and
the lower protruding part (284) is configured to protrude toward the electrode body (20).

11. The battery (1) according to claim 10, wherein
the lower protruding part (284) comprises a flexible part (284b), and is arranged inside the battery case (10) in a compression state by making the flexible part (284b) be bent.

## Patentansprüche

1. Batterie (1), aufweisend:
einen Elektrodenkörper (20) in einer flachen Gestalt, der eine erste Elektrode (22) und eine zweite Elektrode (24) umfasst und eine mit der ersten Elektrode (22) verbundene erste Elektrodenfahnengruppe (23) aufweist;
ein Batteriegehäuse (10), welches eine Außenverpackung (12) umfasst, die zur Aufnahme des Elektrodenkörpers (20) konfiguriert ist und eine Öffnung (12h) aufweist, sowie eine Verschlussplatte (14) umfasst, die zum Verschließen der Öffnung (12h) konfiguriert ist;
ein erstes elektrisches Kollektorelement (50), welches mit der ersten Elektrodenfahnengruppe (23) verbunden ist; sowie
einen ersten Elektrodenanschluss (30), welcher elektrisch mit der ersten Elektrode (22) verbunden ist, wobei
die Verschlussplatte (14) ein Anschlussherausführungsloch (18) aufweist,
das erste elektrische Kollektorelement (50) einen ersten Bereich (51a) aufweist, der entlang einer Oberfläche an einer Seite des Elektrodenkörpers (20) der Verschlussplatte (14) angeordnet ist,
ein erstes Isolierelement (70) zwischen der Verschlussplatte (14) und dem ersten Bereich (51a) angeordnet ist,
das erste Isolierelement (70) ein Penetrationsloch (71h) aufweist,
der erste Elektrodenanschluss (30) in das Anschlussherausführungsloch (18) eingeführt ist,
der erste Elektrodenanschluss (30) in das Penetrationsloch (71h) eingeführt ist,
ein zweites Isolierelement (80, 280) zwischen dem ersten Bereich (51a) und dem Elektrodenkörper (20) angeordnet ist, und
das zweite Isolierelement (80, 280) mit dem ersten Isolierelement (70) verbunden ist.

2. Batterie (1) nach Anspruch 1, wobei
der Elektrodenkörper (20) eine zweite Elektrodenfahnengruppe (25) aufweist, die mit der zweiten Elektrode (24) verbunden ist,
die erste Elektrodenfahnengruppe (23) an einem Endteil (201) des Elektrodenkörpers (20) angeordnet ist,
die zweite Elektrodenfahnengruppe (25) an einem anderen Endteil (202) des Elektrodenkörpers (20) angeordnet ist,
das Batteriegehäuse (10) einen Bodenteil (12a), ein Paar von erstseitigen Wänden (12c) und ein Paar von zweitseitigen Wänden (12b) aufweist,
die erste Elektrodenfahnengruppe (23) an einer Seite des Paares von erstseitigen Wänden (12c) angeordnet ist und
die zweite Elektrodenfahnengruppe (25) an einer anderen Seite des Paares von erstseitigen Wänden (12c) angeordnet ist.

3. Batterie (1) nach Anspruch 1 oder 2, wobei
ein Teil des zweiten Isolierelements (80, 280) an der Verschlussplatte (14) anliegt oder näher an dieser angeordnet ist.

4. Batterie (1) nach einem der Ansprüche 1 bis 3, wobei
das zweite Isolierelement (80, 280) aufweist:
einen Basisteil (81, 281), der dem ersten Bereich (51a) gegenüberliegt; und
einen Erstreckungsbereich (82, 282), der sich von dem Basisteil (81, 281) entlang der Verschlussplatte (14) in Richtung eines mittleren Teils der Verschlussplatte (14) erstreckt.

5. Batterie (1) nach Anspruch 4, wobei
das zweite Isolierelement (80, 280) einen Verbindungsteil (81a, 281a) aufweist, der sich von dem Basisteil (81, 281) in Richtung der Verschlussplatte (14) erstreckt, und
das zweite Isolierelement (80, 280) über den Verbindungsteil (81a, 281a) mit dem ersten Isolierelement (70) verbunden ist.

6. Batterie (1) nach Anspruch 4 oder 5, wobei
der Erstreckungsbereich (82, 282) einen oberen vorstehenden Teil (82a, 282a) an einer Oberfläche (80b, 280b) auf der Seite der Verschlussplatte (14) aufweist, und
der obere vorstehende Teil (82a, 282a) derart konfiguriert ist, dass dieser in Richtung der Verschlussplatte (14) vorsteht.

7. Batterie (1) nach einem der Ansprüche 4 bis 6, wobei
bei dem Erstreckungsbereich (82, 282) eine Querschnittsfläche eines benachbarten Abschnitts (83, 283) benachbart zu dem Basisteil (81, 281) kleiner ist als eine Querschnittsfläche bei dem Basisteil (81, 281) und eine Querschnittsfläche bei einem anderen Abschnitt des Erstreckungsbereichs (82, 282) mit Ausnahme des benachbarten Abschnitts (83, 283).

8. Batterie (1) nach einem der Ansprüche 1 bis 7, wobei
das zweite Isolierelement (80, 280) mehrere Durchgangslöcher (81h, 82h, 83h, 281h, 283h) aufweist.

9. Batterie (1) nach einem der Ansprüche 1 bis 8, wobei
das zweite Isolierelement (80, 280) aus einem Material konfiguriert ist, dessen Schmelzpunkt niedriger ist als dieser des ersten Isolierelements (70).

10. Batterie (1) nach einem der Ansprüche 4 bis 7, wobei
der Erstreckungsbereich (282) einen unteren vorstehenden Teil (284) auf der Oberfläche (280a) an der Seite des Elektrodenkörpers (20) aufweist und
der untere vorstehende Teil (284) derart konfiguriert ist, dass dieser in Richtung des Elektrodenkörpers (20) vorsteht.

11. Batterie (1) nach Anspruch 10, wobei
der untere vorstehende Teil (284) einen flexiblen Teil (284b) aufweist und in einem komprimierten Zustand innerhalb des Batteriegehäuses (10) angeordnet ist, indem der flexible Teil (284b) verbogen ist.

## Revendications

1. Une batterie (1), comprenant :
un corps d'électrode (20) de forme plate, qui contient une première électrode (22) et une deuxième électrode (24), et qui comprend un premier groupe de languettes d'électrode (23) relié à la première électrode (22) ;
un boîtier de batterie (10) qui comprend un emballage extérieur (12) configuré pour loger le corps d'électrode (20) et présentant une ouverture (12h), et qui comprend une plaque d'étanchéité (14) configurée pour obturer l'ouverture (12h) ;
un premier élément collecteur électrique (50) qui est relié au premier groupe de languettes d'électrode (23) ; et
une première borne d'électrode (30) qui est reliée électriquement à la première électrode (22),
dans laquelle
la plaque d'étanchéité (14) comporte un trou de sortie de borne (18),
le premier élément collecteur électrique (50) comprend une première zone (51a) qui est disposée le long d'une surface sur un côté du corps d'électrode (20) de la plaque d'étanchéité (14),
un premier élément isolant (70) est disposé entre la plaque d'étanchéité (14) et la première zone (51a),
le premier élément isolant (70) comporte un trou de passage (71h),
la première borne d'électrode (30) est insérée dans le trou de sortie de borne (18),
la première borne d'électrode (30) est insérée dans le trou de passage (71h),
un deuxième élément isolant (80, 280) est disposé entre la première zone (51a) et le corps d'électrode (20), et
le deuxième élément isolant (80, 280) est relié au premier élément isolant (70).

2. La batterie (1) selon la revendication 1, dans laquelle
le corps d'électrode (20) comprend un deuxième groupe de languettes d'électrode (25) relié à la deuxième électrode (24),
le premier groupe de languettes d'électrode (23) est disposé au niveau d'une partie d'extrémité (201) du corps d'électrode (20),
le deuxième groupe de languettes d'électrode (25) est disposé au niveau d'une autre partie d'extrémité (202) du corps d'électrode (20),
le boîtier de batterie (10) comprend une partie inférieure (12a), une paire de premières parois latérales (12c) et une paire de deuxièmes parois latérales (12b),
le premier groupe de languettes d'électrode (23) est disposé sur un côté de la paire de premières parois latérales (12c), et
le deuxième groupe de languettes d'électrode (25) est disposé sur l'autre côté de la paire de premières parois latérales (12c).

3. La batterie (1) selon la revendication 1 ou 2, dans laquelle
une partie du deuxième élément isolant (80, 280) vient en butée contre la plaque d'étanchéité (14) ou est disposée plus près de celle-ci.

4. La batterie (1) selon l'une quelconque des revendications 1 à 3, dans laquelle
le deuxième élément isolant (80, 280) comprend :
une partie de base (81, 281) qui est opposée à la première zone (51a) ; et
une zone d'extension (82, 282) qui s'étend depuis la partie de base (81, 281) le long de la plaque d'étanchéité (14) vers une partie centrale de la plaque d'étanchéité (14).

5. La batterie (1) selon la revendication 4, dans laquelle
le deuxième élément isolant (80, 280) comprend une partie de raccordement (81a, 281a) qui s'étend depuis la partie de base (81, 281) vers la plaque d'étanchéité (14), et
le deuxième élément isolant (80, 280) est relié au premier élément isolant (70) par l'intermédiaire de la partie de raccordement (81a, 281a).

6. La batterie (1) selon la revendication 4 ou 5, dans laquelle
la zone d'extension (82, 282) comprend une partie saillante supérieure (82a, 282a) sur une surface (80b, 280b) du côté de la plaque d'étanchéité (14), et
la partie saillante supérieure (82a, 282a) est configurée pour faire saillie en direction de la plaque d'étanchéité (14).

7. La batterie (1) selon l'une quelconque des revendications 4 à 6, dans laquelle
sur la zone d'extension (82, 282), la section transversale d'une partie adjacente (83, 283) située à proximité de la partie de base (81, 281) est inférieure à celle de la partie de base (81, 281) et à celle d'une autre partie de la zone d'extension (82, 282) à l'exclusion de la partie adjacente (83, 283).

8. La batterie (1) selon l'une quelconque des revendications 1 à 7, dans laquelle
le deuxième élément isolant (80, 280) comprend plusieurs trous traversants (81h, 82h, 83h, 281h, 283h).

9. La batterie (1) selon l'une quelconque des revendications 1 à 8, dans laquelle
le deuxième élément isolant (80, 280) est réalisé dans un matériau dont le point de fusion est inférieur à celui du premier élément isolant (70).

10. La batterie (1) selon l'une quelconque des revendications 4 à 7, dans laquelle
la zone d'extension (282) comprend une partie saillante inférieure (284) sur la surface (280a) située du côté du corps d'électrode (20), et
la partie saillante inférieure (284) est configurée pour faire saillie en direction du corps d'électrode (20).

11. La batterie (1) selon la revendication 10, dans laquelle
la partie saillante inférieure (284) comprend une partie flexible (284b) et est disposée à l'intérieur du boîtier de batterie (10) dans un état comprimé, la partie flexible (284b) étant pliée à cet effet.
